# EUROPÄISCHE PATENTSCHRIFT

(11) **EP 0 570 703 B1**
(45) Veröffentlichungstag und Bekanntmachung des Hinweises auf die Patenterteilung: **08.11.1995**
(21) Anmeldenummer: 93106363.0
(22) Anmeldetag: 20.04.1993
(51) Int. Cl.: H01M 2/12, H01M 2/04

(54) **Akkumulator mit im Deckel Befindlichem Entgasungssystem**
Accumulateur with a bas-venting system incorporated in the cover
Accumulateur dont le couvercle comporte un système de ventilation

(30) Priorität: 20.05.1992 DE 4216563
(43) Veröffentlichungstag der Anmeldung: 24.11.1993
(73) Patentinhaber: VB Autobatterie GmbH, D-30419 Hannover (DE)
(72) Erfinder: Böhle, Christian, Dr., W-3008 Garbsen 1 (DE); Eckers, Willi, Dr., W-3180 Wolfsburg 22 (DE); Gummelt, Klaus, W-3008 Garbsen 1 (DE); Thäte, Jürgen, W-3171 Vordorf (DE)
(74) Vertreter: Kaiser, Dieter Ralf, Dipl.-Ing.

(56) Entgegenhaltungen:
- EP-A- 0 305 822
- EP-A- 0 459 162
- EP-A- 0 503 264
- EP-A- 0 523 273
- DE-U- 8 007 719
- DE-U- 9 209 986
- FR-A- 1 294 588
- GB-A- 1 262 239
- US-A- 4 851 305
- US-A- 4 916 034

## Beschreibung

Die Erfindung betrifft einen Akkumulator, insbesondere Bleiakkumulator mit einem mehrere Zellen aufnehmenden Gehäuse sowie mit einem das Gehäuse abschließenden Blockdeckel, in dem zwischen einem Basisdeckel und einer dazu im Abstand angeordneten Abdeckplatte ein Gassammelraum zur Säureabscheidung ausgebildet ist, der eine Unterteilung in mehrere Hohlräume entsprechend der Zellenzahl aufweist, welcher mit mindestens einer einen Zündschutz aufweisenden Entgasungsöffnung versehen ist und welcher in der Abdeckplatte für jede Zelle durch einen Verschlußstopfen verschließbare Füll- und Kontrollöffnungen besitzt.

Vorzugsweise ist die Erfindung auf Starterbatterien für den Einsatz in Kraftfahrzeugen gerichtet und bezieht sich insbesondere auf den Deckel des Blockkastengehäuses solcher Batterien.

Bleibatterien entsprechend dem eingangs angegebenen Gattungsbegriff werden bereits in der DE-OS 40 19 462 oder der EP-PS 178 422 beschrieben. Diesen bekannten Akkumulatoren gemeinsam ist eine Deckelausführung als sogenannter Doppeldeckel mit labyrinthförmigen Anordnungen der Gaswege in seinem Innern, einem zentralen Gasabgang und einem der Gasaustrittsöffnung vorgelagerten Flammschutz.

Beim Doppeldeckel ist das mit den Plattensätzen und den Anschlußpolen bereits fertig beschickte Blockkastengehäuse zunächst mit einem Basisdeckel abgeschlossen. Dem Basisdeckel ist eine Abdeckkappe als Oberdeckel aufgeschweißt oder aufgeklebt.

Je nach Gehäusekonstruktion können Basisdeckel und Abdeckplatte auch als komplettes Teil vorgefertigt und anschließend mittels bekannter Verfahren, vorzugsweise durch Spiegelverschweißen, mit dem Blockkasten fest verbunden werden. Gemeinsam bilden sie den Blockdeckel.

Der zwischen dem Basisdeckel bzw. der Abdeckkappe ausgebildete Hohlraum stellt einen Gassammelraum dar, in welchen die Zellengase, bevor sie ins Freie treten, expandieren und sich dabei mitgeschleppter Elektrolytfeuchtigkeit entledigen können. Diese wird durch die gleichen Entgasungsöffnungen im Basisdeckel, durch welche die Zellengase in den Blockdeckel-Hohlraum gelangten, wieder in die Zellen zurückgeführt.

Der Hohlraum dient somit der Säureabscheidung und ist zu deren Unterstützung durch zahlreiche Innenwände, die den Gasstrom häufig umlenken und seine Wegstrecke verlängern, labyrinthartig strukturiert. Die derart getrockneten Gase verlassen den Blockdeckel über Filter-Einsätze als Zünddurchschlagssperren in wenigstens einer Belüftungsöffnung, welche sie zwangsdurchströmen.

Der Erfindung liegt die Aufgabe zugrunde, die Säurerückhaltung bei Bleiakkumulatoren der vorbeschriebenen Art weiter zu verbessern, damit eine erhöhte Kippsicherheit zu erreichen und die Batterie konstruktiv so zu gestalten, daß eine Dichtigkeitsprüfung der Einzelzellen bei der fertigen Batterie möglich ist.

Die Aufgabe wird erfindungsgemäß durch einen Bleiakkumulator gelöst, wie er im Patentanspruch 1 definiert ist.

Im Äußeren übereinstimmend mit bekannten, vorzugsweise 6-zelligen Starterbatterien des wartungsfreien Typs umfaßt der neue Akkumulator ein Blockkastengehäuse mit einem Blockdeckel, der sich aus einem Basisdeckel und einer Abdeckplatte zusammensetzt, wobei der Basisdeckel nur zu seinem größeren Teil von der Abdeckplatte abgedeckt wird, im Bereich zwischen den Batterie-Endpolen dagegen neben der Abdeckplatte eine Erhebung bildet, die mit der Oberseite der Abdeckplatte bündig abschließt.

Das Gehäuse- und Deckelmaterial des Akkumulators ist einheitlich ein thermoplastischer Kunststoff, vorzugsweise Polyethylen oder Polypropylen. Die Wanddicken des Blockkastens und des Deckels liegen zwischen 1 und 3 mm.

Beide Deckelteile sind fest miteinander verschweißt und der komplette Blockdeckel seinerseits mit dem Blockkasten durch Schweißen, Kleben oder auf andere Weise fest sowie flüssigkeits- und gasdicht verbunden.

Auf der Abdeckplatte befindet sich für jede Zelle eine Füll- und Kontrollöffnung nebst einem dazugehörigen Verschlußstopfen.

Erfindungsgemäß ist nun der Verschlußstopfen so gestaltet, daß er sich bis in die Ebene des Basisdeckels herab erstreckt und daß eine Gasaustrittsstelle in der Ebene des Basisdeckels im Bereich des Verschlußstopfens, vorzugsweise im Basisdeckel, vorhanden ist, deren Größe so bemessen ist, daß bei kurzzeitiger Kippung bis zu 180° nicht mehr Säure aus dem Gasraum der Zelle austreten kann, als von dem ihr zugeordneten Hohlraum aufgenommen wird.

Diese und weitere Merkmale des Gegenstandes der Erfindung werden nachfolgend anhand mehrerer Figuren näher erläutert.
Figur 1 zeigt einen Verschlußstopfen für eine Füll- und Kontrollöffnung einer Einzelzelle des Bleiakkumulators
Figur 2 zeigt den Basisdeckel in einer Draufsicht
Figur 3 zeigt einen Gassammelkanal im Längsschnitt
Figur 4 zeigt eine Ansicht der Abdeckplatte von unten
Figur 5 zeigt einen Querschnitt durch den kompletten Blockdeckel längs einer Linie A-A in Figur 2
Figuren 6 und 7 zeigen Details des Blockdeckels im Bereich des Gasausganges

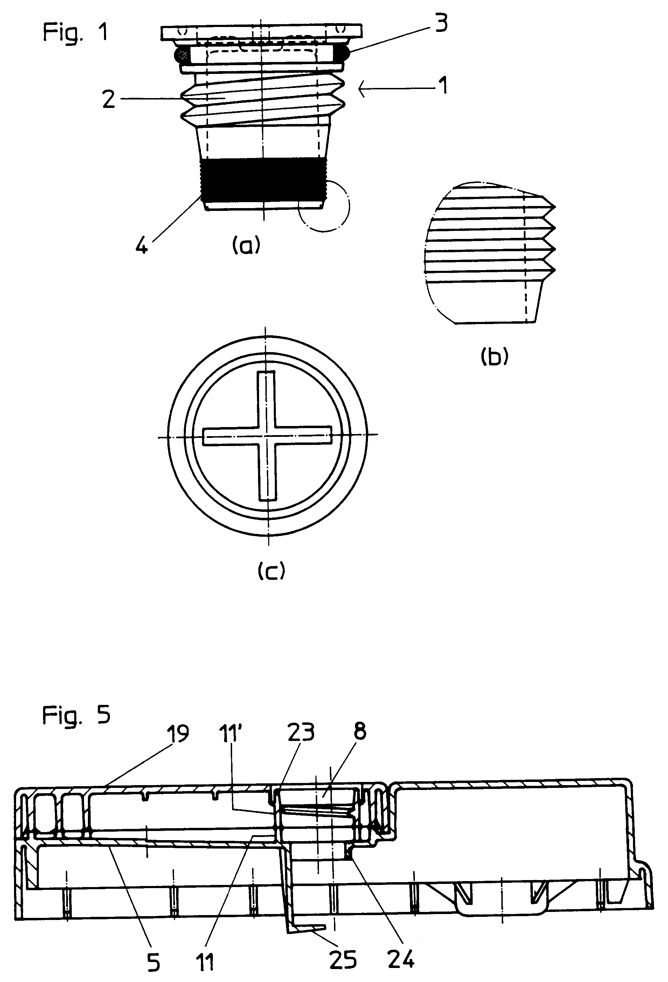

Gemäß Figur 1, Teilfigur (a), ist der Verschlußstopfen 1 mit einem Gewinde 2 zum Einschrauben in die von einem Rohrstutzen gebildete Einfüllöffnung versehen. Sein besonderes Merkmal ist das Vorhandensein zweier Dichtungen auf zwei Ebenen, die ihn befähigen, die Einfüllöffnung sowohl in Höhe der Abdeckplatte als auch in Höhe des Basisdeckels zu verschließen. Die Abdichtung gegen die Abdeckplatte übernimmt eine Gummidichtung 3 in Form eines O-Ringes, während eine Lamellendichtung 4 das Basisteil des Stopfens gegen den Basisdeckel abdichtet. Letztere, in Teilfigur b vergrößert wiedergegeben, erschwert zumindest das Eindringen von Eletrolyt aus der Zelle in das -weiter hinten noch zu beschreibende- Kammersystem des Doppeldeckels. Durch die Stopfendichtung auf zwei Ebenen wird die Kippsicherheit des Akkumulators wesentlich verbessert.

Teilfigur c zeigt den Verschlußstopfen von oben.

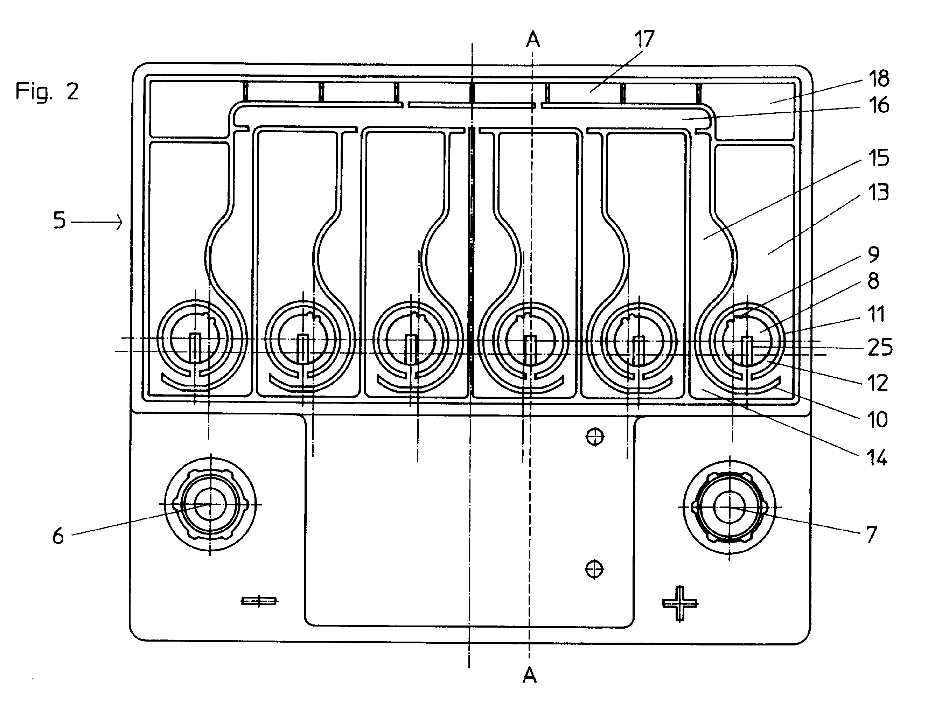

Figur 2 ist eine Draufsicht auf den Basisdeckel 5, wie er sich vor dem Aufschweißen der Abdeckplatte darstellt. Die Figur gibt zugleich den gesamten Umriß einer Starterbatterie mit den Endpolen 6,7 wieder, deren 6 Zellen (nicht sichtbar) sich unterhalb des Basisdeckels befinden.

Für jede Zelle ist eine Einfüllöffnung 8 vorhanden, welche von der Abdeckplatte ausgehend und sich in Form eines Rohrstutzens abwärts erstreckend hier die Ebene des Basisdeckels durchbricht. Normalerweise wird die Einfüllöffnung im Basisdeckel-Bereich von der Lamellendichtung 4 des Verschlußstopfens eingenommen.

Erfindungsgemäß ist die Einfüllöffnung im Basisdeckel durch zwei kleine halbkreisförmige Einschnitte 9 erweitert, die damit unmittelbar neben dem eingeführten Stopfen liegen und dem Wirkungsbereich der Lamellendichtung dadurch entzogen sind. Die halbkreisförmigen Einschnitte bilden daher eine Austrittsstelle für die Zellengase. Ihr Radius sollte im Bereich 0,5 bis 10 mm, vorzugsweise bei 1 bis 3 mm liegen.

Dabei können mit dem Gas auch Säurenebel entweichen. Zu deren Sammlung und Rückführung in die Zellen ist zwischen Basisdeckel und Abdeckplatte ein Gassammelraum vorgesehen, derart, daß jeder Zelle ein eigener Hohlraum zugeordnet ist, innerhalb dessen durch eine labyrinthartige Anordnung von Wänden eine häufige Gasumlenkung erzwungen wird. Sämtliche Wände gehen aus hochstehenden, sowohl dem Basisdeckel als auch der Abdeckplatte einstückig angeformten Stegen von 0,5 bis 2,5 mm Dicke hervor, welche miteinander korrespondieren und sich bei der Verschweißung oder Verklebung beider Deckelteile in der Verbindungsebene vereinigen.

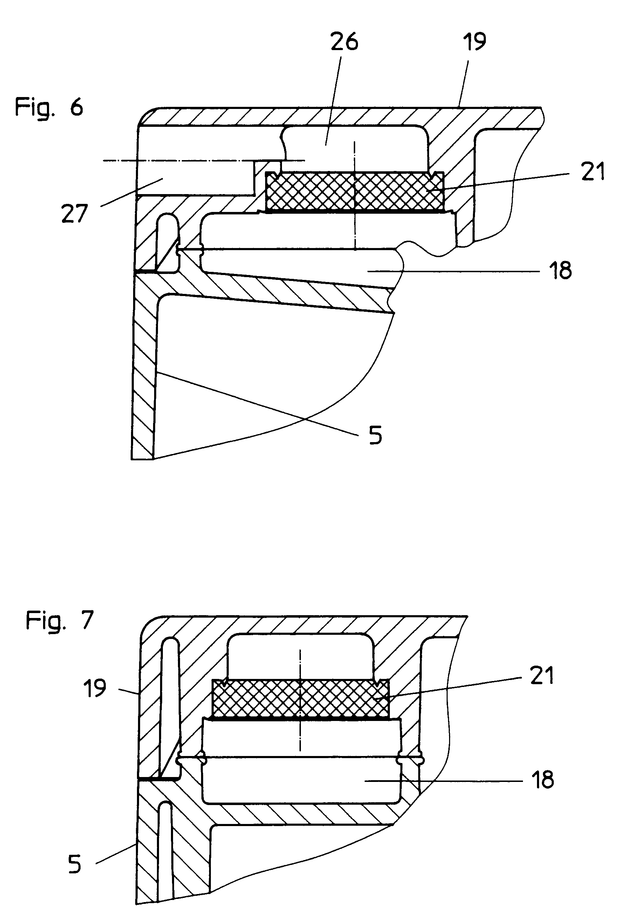

So korrespondiert ein Steg 10 am Basisdeckel mit einem Steg 10′ an der Abdeckplatte und ein Steg 11 am Basisdeckel mit einem Steg 11′ an der Abdeckplatte. Dabei wird aus den kreisförmigen Stegen 11 und 11′ der Rohrstutzen der Einfüllöffnung gebildet (vgl.Figur 5).

Insgesamt definieren die Stege innerhalb eines jeder Zelle zugeordneten Hohlraumes ein System von Kammern 12,13,14,15, die von den Zellengasen der Reihe nach durchströmt werden müssen. Dabei passieren die Gase zusätzlich mehrere Engstellen zwischen den Wänden, wodurch die Abscheidung von Flüssigkeitströpfchen noch gefördert wird.

Die erfindungsgemäße Gestaltung und Aufteilung des Hohlraumes über jeder Zelle bewirkt, daß bei kurzzeitiger Kipplage bis zu 90° alle aus dieser Zelle ausfließende Säure in den vier Kammern zurückgehalten wird und daß bei Rückkehr in die Normallage die Säure auch wieder durch den Gasaustritt in die Zelle zurückfließt.

Zusammen mit einer weiteren konstruktiven Maßnahme, nämlich mittels einer Neigung des Basisdeckels und damit der Kammerböden zur Gasaustrittsstelle hin (vgl. Figur 5), wird durch die erfindungsgemäße Anordnung sichergestellt, daß die aus der jeweiligen Zelle austretende Säure auch in diese -und nur in diese- wieder zurückfließt. Eine Anhäufung von Säure in einer bevorzugten Zelle als Folge von wiederholten Kippvorgängen findet nicht statt.

Aus Figur 2 ist weiter ersichtlich, daß alle jeweils einer Zelle zugeordneten und in Kammern unterteilten Hohlräume miteinander hinsichtlich der Gasführung über eine kanalartige Kammer 16 kommunizieren und daß diese wiederum mit einer kanalartigen Kammer 17 kommuniziert. Auch die Wände dieser Kammern gehen aus korrespondierenden Stegen sowohl am Basisdeckel als auch an der Abdeckplatte im Zuge des Spiegelverschweißens der beiden Teile hervor.

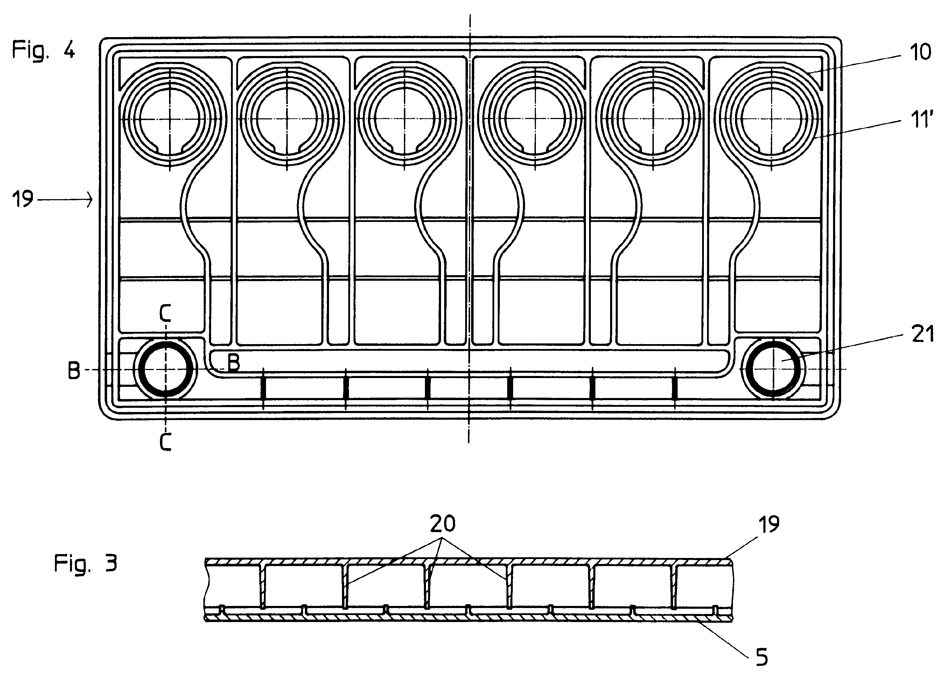

Die Kammer 17 bildet einen Gassammelkanal, wobei das der Kammer zuströmende Gas nochmals Umlenkungen durch Wandvorsprünge erfährt. Ein Längsschnitt durch Kammer 17 in Figur 3 läßt diese Wandvorsprünge wiederum als Stege erkennen, welche zueinander versetzt und einesteils dem Basisdeckel 5, zum anderen Teil dem Abdeckplatte 19 angeformt sind. Durch sie ist der Gasstrom vertikalen Umlenkungen ausgesetzt. Die größeren Stegansätze 20 am Abdeckplatte, die fast die Höhe der Kammer erreichen, wirken als Prallflächen. Daran abgeschiedene Feuchtigkeit kann von den senkrechten Flächen leicht nach unten abtropfen.

Durch die Kammer 18 verläßt das getrocknete Gas die Batterie. Der Austritt aus der Batterie erfolgt durch einen Gaskanal, der sich oberhalb eines Rückzündschutzes in Kammer 18 (vgl. Figur 6 befindet und in einem runden Ausgang endet.

Aufgrund der symmetrischen Blockdeckel-Konstruktion besitzt die Kammer 18 ein Pendant am entgegengesetzten Ende des Gassammelkanals 17. Damit liegt ein redundantes Entgasungssystem vor.

Figur 4 gibt eine Ansicht der Abdeckplatte 19 von unten wieder. Die diesem Deckelteil angeformten Stege bilden in Verlauf und Höhe die exakten Komplemente zu den Stegen des Basisdeckels, mit denen sie erst während des Zusammenschweißens der beiden Deckelteile vereinigt werden.

Bei der Ansicht der Abdeckplatte gemäß Figur 4 liegen ferner die über den Endkammern 18 angeordneten Fritteneinsätze 21 für den Rückzündschutz offen.

Der komplette Doppeldeckel gemäß der Erfindung ist in Figur 5 in einem Querschnitt längs der Linie A-A von Figur 2 dargestellt. Bei dieser Darstellung ist insbesondere die Neigung des Basisdeckels dort, wo er den Boden der Labyrinthkammern bildet, in Richtung zur Einfüllöffnung hin gut erkennbar. Die Trennlinie 22 zeigt die Verschweißungsebene zwischen Basisdeckel 5 und Abdeckplatte 19 an. Die Rohrstutzen der Einfüllöffnung 8 setzt sich aus dem ringförmigen Steg 11′ der Abdeckplatte und dem ringförmigen Steg 11 des Basisdeckels zusammen.

Im oberen Bereich der Einfüllöffnung ist der ringförmige Steg 11′ doppelwandig ausgebildet, dergestalt, daß der Rohrstutzen an seinem oberen Ende durch einen freiliegenden Rand 23 abschließt. Für den Dichtungsring 3 des Verschlußstopfens stellt dieser Rand dank seiner radial wirkenden elastischen Spannung eine besonders günstige Dichtfläche dar.

Eine detaillierte Ansicht der redundanten Kammer 18 geben die Figuren 6 und 7. In Figur 6 ist die Kammer längs einer Linie B-B aus Figur 4, in Figur 7 ist die Kammer 19 entlang der dazu senkrechten Linie C-C aus Figur 4 geschnitten.

Die Rückzündschutz-Fritte 21 aus einem porösen Werkstoff (Keramik, Kunststoff) oder einem Metalldrahtgewebe ist horizontal so angeordnet, daß sie durch die Zellengase von unten her angeströmt und zwangsweise durchströmt wird. Der flache Gaskanal 26 oberhalb des Rückzündschutzes mündet schließlich in den runden Gasausgang 27. Die sich unterhalb des Zündrückschutzes erstreckende Kammer 18 bildet dank einer Bodenneigung des Basisdeckels einen Säuresumpf, der gewährleistet, daß der minimale Abstand zwischen Rückzündschutz und Basisdeckelboden mindestens 4mm beträgt. Dadurch wird bei der Benetzung des Rückzündschutzes ein Ablaufen der Flüssigkeitströpfchen gesichert.

Die erfindungsgemäße Deckelkonstruktion macht eine Prüfung der Einzelzellen auf Dichtigkeit bei der fertigen Batterie möglich, da zwischen der Austrittsstelle der Zellengase im Basisdeckel und ihrem Eintritt in das Labyrinth eine radiale Abdichtung durch den Prüfkopf hergestellt werden kann.

## Patentansprüche

1. Akkumulator, insbesondere Bleiakkumulator mit einem mehrere Zellen aufnehmenden Gehäuse sowie mit einem das Gehäuse abschließenden Blockdeckel, in dem zwischen Basisdeckel und einer dazu im Abstand angeordneten Abdeckplatte ein Gassammelraum zur Säureabscheidung ausgebildet ist, der eine Unterteilung in mehrere Hohlräume entsprechend der Zellenzahl aufweist, welcher mit mindestens einer einen Zündschutz aufweisenden Entgasungsöffnung versehen ist und welcher in der Abdeckplatte für jede Zelle durch einen Verschlußstopfen verschließbare Füll- und Kontrollöffnungen besitzt, dadurch gekennzeichnet, daß sich der Verschlußstopfen (1) bis in die Ebene des Basisdeckels (5) herab erstreckt und daß eine Gasaustrittsstelle (9) in der Ebene des Basisdeckels im Bereich des Verschlußstopfens vorhanden ist, deren Größe so bemessen ist, daß bei kurzzeitiger Kippung bis zu 180° nicht mehr Säure aus dem Gasraum der Zelle austreten kann, als von dem ihr zugeordneten Hohlraum aufgenommen wird.

2. Akkumulator nach Anspruch 1, dadurch gekennzeichnet, daß die Gasaustrittsstelle von zwei halbkreisförmigen Erweiterungen der Durchführungsöffnung für den Verschlußstopfen im Basisdeckel gebildet ist.

3. Akkumulator nach Anspruch 2, dadurch gekennzeichnet, daß der Verschlußstopfen gegen die Abdeckplatte (19) mittels einer Ringdichtung (3) und gegen den Basisdeckel mittels einer an seinem unteren Ende umlaufenden Lamellendichtung (4) abgedichtet ist.

4. Akkumulator nach einem der Ansprüche 1 bis 3, dadurch gekennzeichnet, daß jeder Hohlraum Wände besitzt, die aus korrespondierenden Stegen (10,11) am Basisdeckel und (10′,11′) an der Abdeckplatte gebildet sind und den Hohlraum in ein labyrinthartiges System aus kommunizierenden Kammern (12, 13, 14, 15) aufteilen.

5. Akkumulator nach einem der Ansprüche 1 bis 4, dadurch gekennzeichnet, daß die vom Basisdeckel gebildete Bodenfläche jedes Hohlraumes gegen die Gasaustrittsstelle (9) geneigt ist.

6. Akkumulator nach einem der Ansprüche 1 bis 5, dadurch gekennzeichnet, daß die jeder Zelle zugeordneten Hohlräume über kanalartige Kammern (16,17) kommunizieren und daß aufgrund der symmetrischen Deckelkonstruktion Endkammern (18), die Gasausgänge (27) besitzen, beidseitig und redundant vorhanden sind.

7. Akkumulator nach Anspruch 6, dadurch gekennzeichnet, daß die Endkammern mit einem Rückzündschutz (21) versehen sind.

8. Akkumulator nach Anspruch 7, dadurch gekennzeichnet, daß zwischen dem vertikal von den Akkumulatorgasen durchströmten Rückzündschutz und dem Kammerboden ein ausreichender Höhenabstand zum Sammeln von Säure vorhanden ist.

9. Akkumulator nach einem der Ansprüche 1 bis 8, dadurch gekennzeichnet, daß die Einfüllöffnung (8) jeder Zelle von einem Rohrstutzen (11,11′) gebildet ist, der an seinem oberen Ende mit einem freistehenden Rand abschließt, welcher der Gummidichtung (3) des eingeführten Verschlußstopfens (1) mit radial wirkender elastischer Spannung anliegt.

## Claims

1. An accumulator, in particular a lead accumulator having a housing which receives a plurality of cells and having a one-piece cover which closes off the housing and in which there is constructed between the-base cover and a covering plate arranged spaced therefrom a gas collection chamber for acid separation which is divided into a plurality of cavities in accordance with the number of cells, this accumulator being provided with at least one venting opening which has a spark prevention means, and having in the covering plate, for each cell, filling and monitoring openings which can be closed by a closing plug, characterized in that the closing plug (1) extends down into the plane of the base cover (5), and in that a gas exit point (9) is provided in the plane of the base cover in the region of the closing plug, the size thereof being such that in the event of brief tilting of up to 180° no more acid can emerge from the gas chamber of the cell than is received by the cavity associated therewith.

2. An accumulator according to Claim 1, characterized in that the gas exit point is formed in the base cover by two semi-circular widened portions in the passage opening for the closing plug.

3. An accumulator according to Claim 2, characterized in that the closing plug is sealed with respect to the covering plate (19) by means of an annular seal (3) and is sealed with respect to the base cover by means of a lamellar seal (4) peripheral at its lower end.

4. An accumulator according to one of Claims 1 to 3, characterized in that each cavity has walls which are formed by corresponding webs (10, 11) on the base cover and (10′, 11′) on the covering plate and which divide the cavity into a labyrinthine system of communicating chambers (12, 13, 14, 15).

5. An accumulator according to one of Claims 1 to 4, characterized in that the bottom surface, formed by the base cover, of each cavity is inclined with respect to the gas exit point (9).

6. An accumulator according to one of Claims 1 to 5, characterized in that the cavities associated with each cell communicate by way of canal-like chambers (16, 17), and in that, because of the symmetrical cover construction, end chambers (18) which have gas outlets (27) are provided on both sides and in redundant manner.

7. An accumulator according to Claim 6, characterized in that the end chambers are provided with a spark-back prevention means (21).

8. An accumulator according to Claim 7, characterized in that an adequate vertical spacing for the collection of acid is provided between the spark-back prevention means, through which the accumulator gases flow vertically, and the chamber bottom.

9. An accumulator according to one of Claims 1 to 8, characterized in that the filling opening (8) of each cell is formed by a connecting sleeve (11, 11′) which terminates at its upper end in a free edge which bears against the rubber seal (3) of the inserted closing plug (1) with radially acting resilient tension.

## Revendications

1. Accumulateur, notamment accumulateur au plomb avec un bac recevant plusieurs éléments ainsi qu'avec un couvercle de batterie fermant le bac, et dans lequel entre le couvercle de base et une plaque de recouvrement disposée à une certaine distance sur celui-ci un espace collecteur de gaz est ménagé pour la séparation de l'acide, cet espace comportant une subdivision de plusieurs espaces creux correspondant au nombre des éléments, et étant muni d'au moins un orifice de dégazage comportant une protection contre l'allumage tandis que dans la plaque de recouvrement il comporte pour chaque élément des orifices de remplissage et de contrôle susceptibles d'être fermés par un bouchon, accumulateur caractérisé en ce que le bouchon (1) s'étend vers le bas jusque dans le plan du couvercle de base (5) et en ce que un emplacement de sortie des gaz (9) est prévu dans le plan du couvercle de base au voisinage du bouchon, emplacement dont la grandeur est mesurée de façon que lors d'un renversement de courte durée jusqu'à 180° il ne peut pas s'échapper de l'espace de gaz de l'élément plus d'acide qu'il n'en a été reçu par l'espace creux qui lui est associé.

2. Accumulateur selon la revendication 1, caractérisé en ce que l'emplacement de sortie des gaz est formé par deux élargissements semi-circulaires de l'orifice de passage pour le bouchon de fermeture dans le couvercle de base.

3. Accumulateur selon la revendication 2 caractérisé en ce que le bouchon de fermeture est étanché par rapport à la plaque de recouvrement (19) au moyen d'un joint d'étanchéité annulaire (3) et par rapport au couvercle de base au moyen d'un joint d'étanchéité à lamelles (4) entourant son extrémité inférieure.

4. Accumulateur selon une des revendications 1 à 3 caractérisé en ce que chaque espace creux comporte des parois qui sont formées à partir de nervures correspondantes (10, 11) sur le couvercle de base et (10′, 11′) sur la plaque de recouvrement et qui répartissent l'espace creux en un système de chambre communicante (12, 13, 14, 15) en forme de labyrinthe.

5. Accumulateur selon une des revendications 1 à 4 caractérisé en ce que la surface de fond de chaque espace creux formé par le couvercle de base est inclinée vers l'emplacement de sortie des gaz (9).

6. Accumulateur selon une des revendications 1 à 5 caractérisé ce que les espaces creux associés à chaque élément communiquent par l'intermédiaire de chambres en forme de canal (16, 17) et en ce que du fait de la construction symétrique du couvercle il est prévu des deux côtés de façon redondante des chambres terminales (18) qui comportent les sorties de gaz (27).

7. Accumulateur selon la revendication 6 caractérisé en ce que les chambres terminales sont munies d'une protection de retour d'allumage (21).

8. Accumulateur selon la revendication 7 caractérisé en ce qu'entre la protection de retour d'allumage traversée verticalement par les gaz de l'accumulateur et le fond de la chambre il est prévu un espacement en hauteur suffisant pour la collecte de l'acide.

9. Accumulateur selon une des revendications 1 à 8 caractérisé en ce que l'orifice de remplissage (8) de chaque élément est constitué par une tubulure (11, 11′), qui se termine à son extrémité supérieure par un bord libre, auquel s'applique avec une tension élastique agissant radialement le joint d'étanchéité en caoutchouc (3) du bouchon de fermeture (1) mis en place.
